# EUROPEAN PATENT APPLICATION

(11) **EP 0 736 404 A2**
(43) Date of publication of application: **09.10.1996**
(21) Application number: 96104877.4
(22) Date of filing: 27.03.1996
(51) Int. Cl.: B60J 7/06

(54) **Profiled guide member for truck covers**

(30) Priority: 05.04.1995 IT MI950687
(71) Applicant: Croce, Mattia Celso, dba SPRING di CROCE MATTIA CELSO & C. S.n.c., 20053 Muggio (Milano) (IT); Tonelli, Ileana, dba SPRING di CROCE MATTIA CELSO & C. S.n.c., 20053 Muggio (Milano) (IT); Croce, Dario, dba SPRING di CROCE MATTIA CELSO & C. S.n.c., 20053 Muggio (Milano) (IT)
(72) Inventor: Croce, Mattia Celso, 20053 Muggio' (Milano) (IT)
(74) Representative: Modiano, Guido, Dr.-Ing.

(57) **Abstract**

The profiled guide member for truck covers has two symmetrical bars (1,1a) which are interconnected at mutually adjacent ridges (6,6a) and straight portions (10,10a). The ridges (6,6a) are upwardly connected to wings (7,7a) defining a quadrangular recess (8,8a) having a base (5) and a slot (18) formed therein for accommodating slider wheels (16a, 16b) or locking plates and screws (24), for respectively movably or rigidly connecting the guide member to ribs (20) associated with a truck loading platform. Flat faces (1b,1b) extend downwardly from the base (5) and are shaped to define a hollow body (A1,A2). Outwardly open dovetail-shaped cavities (12,12a) are formed below the hollow body (A1,A2) for accommodating, respectively, wheels (26) connected to an intermediate post (27) and a dovetail-shaped end of a rub rail (28). A recess (12,12a) having a longitudinal opening (15) is formed at the bottom of the guide member below the dovetail-shaped cavities (12,12a) for accommodating a pair of pulleys (23,23a) supporting a tarpaulin (25) located between the lower end of the rub rail (28) and the intermediate post (27).

## Description

The present invention relates to a profiled guide member for truck covers, and in particular to a metal runner with a plurality of parallel raceways that allows independent movement, both during closure and during opening, of continuous lateral tarpaulins or tarpaulin panels, of the ribs that support the tarpaulin panel that constitutes the roof, and of the intermediate stakes that form, as a whole, the closure of the bodies with tilt-down sidewalls of trucks for hauling goods.

As known, trucks and the associated trailers used to haul goods of any kind must have a loading platform or deck, or a body with tilt-down or fixed sidewalls, that has standard width dimensions, so as to have a preset transverse space occupation when the body is closed.

It is also known that in order to protect the volume of load while the vehicle is traveling, covering structures are provided above the deck constituted by uprights, which are located at the four corners of the body but do not interfere with the tilt-down sidewalls, and two supporting and guiding bars anchored to the uprights in various manners; said bars are parallel to the longitudinal sides of the body and support equidistant transverse ribs. Said bars are constituted by straight profiles with rail-like or similar guiding elements on which sliders are mounted which support, in certain cases, a single waterproof membrane or tarpaulin whose size is such as to constitute both the roof, supported by said transverse ribs, and the lateral covering of the two longitudinal sidewalls of the body. In such structural arrangements, the ribs are also mounted so that they can perform a translatory motion within a separate runner of the two bars, so as to allow the simultaneous translatory motion of the roof and of the lateral tarpaulin panels from one end to the other end of the body, gathering them in a pack at one end, to allow a load to be positioned on the body from all sides and from above said body.

In other cases, the lateral tarpaulin panels are guided independently of the one that constitutes the roof (i.e. the ribs and the upper tarpaulin panel) to allow the body to be loaded from above or from one or both sides of said body, according to requirements.

In the case of very long bodies, in order to avoid flexing of the horizontal bars that support said runners, there are intermediate posts or uprights between the end uprights; said posts are also connected to sliders that can perform a translatory motion within runners that are parallel to those of the ribs and the two lateral tarpaulin panels, in order to allow translatory motion of the posts to one end or the other of the body and thus allow loading from the sides of the body without fixed obstacles that would reduce its loading possibilities.

The horizontal bars that support said runners must have a thickness dimension which is substantially equal to the thickness of the lateral sidewalls connected to the deck or loading platform. This prevents the runners of the sliders or of the tarpaulin-supporting trolleys from protruding outwards, in contrast with the standards that determine the width of the vehicle body, and also prevents them from protruding towards the inside of the body, in which case they would reduce its loading volume, specially when the load is of the palletizable type, i.e., has preset dimensions to occupy as fully as possible the volume of the body starting from the deck up to the upper ribs.

Current bars with parallel runners, owing to their particular structure, which requires rail-like runners for the roof, lateral runners on the bars for the lateral tarpaulin panels, for the posts, and for the so-called "rub rail" for providing a seal between the runners and the lateral tarpaulin panels, and other particular operations for mutually anchoring the uprights and the bars with runners, are not able to fully and cheaply solve the problem of the full utilization, for loading purposes, of the internal volume of the body up to the ribs that support the upper tarpaulin closure panel.

Accordingly, an aim of the present invention is to provide a profiled guide member for truck covers, having a runner with a plurality of raceways for the independent closing and opening movement of the lateral tarpaulin panels, of the tarpaulin panel that forms the roof, and of any intermediate posts, which constitute the closure of bodies of trucks and the like, which is conceived so as to obviate the drawbacks of the various bars with parallel runners and is most of all such as to be highly reliable and capable of allowing complete utilization of the loading volume of the truck or trailer, with evident practical and economic advantages.

An object of the invention is to provide a profiled guide member for truck covers of the above specified type that is easy and quick to produce, highly rigid, and also allows easy sliding, for opening and closure, of the lateral tarpaulin panels, of the tarpaulin panel that forms the roof, and of any intermediate posts, without requiring any special and bulky equipment for their movement.

Another object of the invention is to provide a profiled guide member for truck covers which has a plurality of raceways that is conceived so that it is possible to quickly provide coverings having a fixed or sliding roof, at all times independently of the movement of the lateral tarpaulin panels and of any intermediate stakes.

Another object of the invention is to provide a profiled guide member for truck covers that operates reliably, can be adapted to bodies of various length and with tilt-down sidewalls, and can be applied to fixed uprights of various heights depending on the height of the intended loading volume.

With the foregoing aim and these and other objects in view, the present invention provides a profiled guide member for truck convers as defined in the appended claims.

The profiled guide member according to the invention has a runner with a plurality of raceways for the opening-closing movement of the upper and lateral covering tarpaulin panels of the bodies of trucks in general and of bodies with tilt-down sidewalls in particular, of the type that is constituted by a metal bar that is mounted at the tip of each one of the lateral pairs of conventional uprights that rise at the corners of the body.

The present invention provides a profiled guide member for truck covers, comprising a straight metal bar or profile whose maximum thickness is equal to that of the sidewalls of the truck, said profile having, at least partially, a box-like structure and being shaped so as to have, in the upper part of a first box-like portion, a substantially T-shaped continuous rail whose web protrudes centrally from said wall, said rail being adapted to contain sliders that support the ribs and the tarpaulin panel that forms the roof of the covering, whereas the lower box-like portion of said profile is provided with a longitudinal slot for the passage of the lateral covering tarpaulin panel and is shaped so as to have, inside said profile, two substantially dovetail-shaped opposite runners for the sliding of two coaxial pulleys that support said lateral tarpaulin panel, two opposite flared portions being formed in the body of the profile between said upper box-like portion and the lower one, said flared portions forming two substantially dovetail-shaped runners that are open on the opposite longitudinal sides of the profile, the runner directed toward the outside of the body being provided for the anchoring of a conventional lateral rub rail, the opposite runner being adapted to contain sliding pulleys for supporting intermediate posts movable independently of the lateral tarpaulin panels and the sliding roof.

More particularly, said runner shaped like a box-like bar is preferably constituted by two symmetrically identical metal profiles, each of which is shaped so as to have half, in the longitudinal direction, of said rail and of the runners for the ribs and the associated roof, for the lateral tarpaulin panel, for the posts, and for the rub rail, said two shaped profiles being furthermore mutually coupled in a mutually opposite position, by means of pins that are formed on one of the flat parts that are mutually in contact, said pins being inserted in holes formed in the other part, so as to make the runner according to the invention rigid.

Furthermore, the portion of the box-like profile that bears said rail for the ribs and for the tarpaulin panel that forms the roof of the covering is provided with dimensions that can vary in terms of height and therefore of greater rigidity, in order to allow to provide runners of different length according to the dimensions of the vehicle body to be connected.

Likewise, the sliders that run on the T-shaped rails are provided with means for locking them on said rail, in order to provide covering roofs that are fixed and independent of the sliding of the lateral tarpaulin panels.

Further characteristics and advantages of the present invention will become apparent from the following detailed description, made with reference to the accompanying drawings, which are provided only by way of non-limitative example and wherein:
figure 1 is a schematic view of a large truck that uses, to cover the roof and the sidewalls, two runners with a plurality of profiled guide members according to the invention;
figures 2, 3, and 4 are perspective views of three runner segments, without the sliders and the pulleys, that are structurally identical to one another and differ only in their length (or height), so that they can be used on bodies of different lengths;
figure 5 is a transverse sectional view of a profiled guide member executed according to the invention, with sliders for sliding ribs, sliding intermediate stakes, a sliding lateral tarpaulin panel, and a fixed protective rub rail;
figure 6 is a view of the profiled guide member shown in figure 5, with rib sliders locked to the T-shaped rail, in the case of a fixed covering roof;
figure 7 is a perspective view of a portion of a continuous rub rail to be engaged stably inside the outer raceway of the profiled guide member; and
figure 8 is a view of a different embodiment of the profiled guide member with a plurality of raceways, according to the present invention.

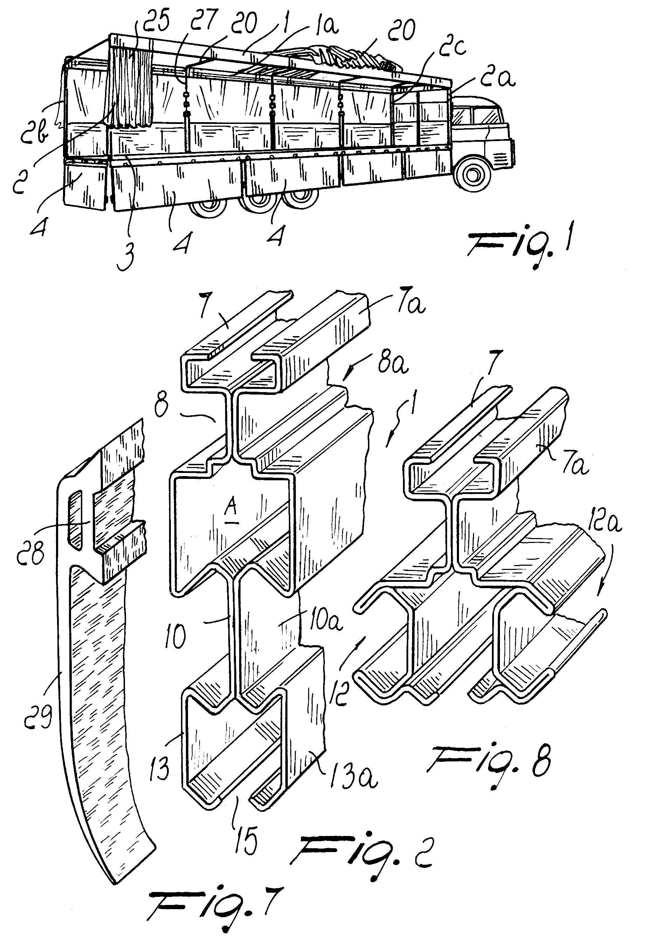

With reference to said figures, and particularly to figures 1 to 7, the profiled guide member with a plurality of raceways according to the invention is substantially constituted, in the case of figures 2-3-4, by a straight bar, generally designated by the reference numeral 1 in figure 1, that is anchored in a conventional manner to the upper end of the two conventional lateral uprights 2-2a of the body 3 with tilt-down sidewalls 4.

An identical bar 1a is mounted at the end of the other two lateral uprights 2b-2c of said body 3. Each one of said bars 1 (1a) is substantially constituted by a profile made of metal plate, formed by two identical pre-shaped elements and more specifically by two plates that are initially flat and parallel and are then shaped so as to have a straight flat portion 1b (1c) that is folded at right angles in an upward region, such as to constitute a base 5 (5a) that is perpendicular to the flat face 1b (1c) and are then folded upwards so as to constitute a ridge 6 (6a); said ridge is then curved substantially in a C-like shape so as to form a flat head 7 (7a) which, together with the contiguous flat portion 5 (5a), forms a continuous quadrangular recess 8 (8a) (figure 3).

At the opposite end, said flat plate 1b (1c) has a portion 9 (9a) that is folded so as to form an angle and then continues with a straight portion 10 (10a) which in turn has a portion 11 (11a) that is folded at an angle that is opposite to the angle formed by the portion 9 (9a) so as to form a recess 12 (12a) (figure 3) that is substantially dovetail-shaped.

Said angled portion 11 (11a) then continues with a portion of flat metal plate 13 (13a) that is slightly recessed or shifted with respect to the plane of the face 1b (1c) and then ends with a portion 14 (14a) that is folded at an angle like the opposite one 11.

Each bar or runner with a plurality of raceways is therefore constituted by two identical elements 1b-1c that are substantially half-shells, are mutually coupled in a symmetrically opposite position, and are rigidly anchored by locking the straight portions 6 and 10 that are in mutual contact. Locking is preferably provided by force-fitting, by pressing, pins that protrude from the face of a straight portion of one half-shell into dead holes that are formed correspondingly in the straight portion of the other half-shell.

As clearly shown by figures 2, 3, and 4, the profiled guide member with a plurality of raceways is therefore constituted by a quadrangular hollow central body that is formed by the flat walls 1b-1c and has, at one end, two opposite and identical cavities 8-8a that end with a head 7-7a; the straight portions 6-6a therefore constitute the web of a T-shaped rail, whereas the wings 7-7a form its head.

Likewise, two identical and mutually opposite cavities 12-12a are formed at the other end of the hollow central body 1b-1c, are substantially dovetail-shaped, and are open outwards, whereas at the end of the central straight portions 10-10a, between flat walls 13 and 13a, there are two dovetail runners that are also mutually opposite but lie inside the cavity formed by the opposite walls 13-13a. The end portions 14-14a folded at an angle inside the cavity are sized so as to leave a longitudinal opening 15 for the passage of the lateral tarpaulin panel, as will become apparent hereinafter.

As mentioned, the three profiled guide members with a plurality of raceways shown in figures 2, 3, and 4 differ from each other only in the vertical dimensions of the central quadrangular hollow body, which is designated in said figures by the letters A, A1, and A2, starting from the smaller one of figure 2, for the sake of clarity.

Once the profiled guide member 1 (1a) as described above has been formed, sliders with two wheels 16-16a (figure 5) are inserted in the opposite cavities 8-8a of the T-shaped rail; said wheels are mounted freely on a quadrangular secondary frame 17 that moves, with a slight play, on the upper surface 7-7a of the rail; furthermore, the flat end 19 of a tubular rib 20 is anchored to the upper flat face of the wings 7-7a (which are interrupted longitudinally to leave a continuous slot 18) (figures 1-3) of each secondary frame 17, and the upper covering tarpaulin panel 21 is arranged above the ribs and forms the movable roof of said covering; the end of the tarpaulin panel 21 is curved around the secondary frame and is locked in 22 on the wall of said secondary frame that lies outside the volume of the body. In this case, the roof can be moved and gathered in a pack equally at either end of the body, independently of the translatory motion of the lateral tarpaulin panels and of any intermediate stakes, as will become apparent hereinafter.

If a fixed roof is required, the flat ends 19 of the ribs are locked to the head of the rail by means of a plate 23, which is inserted in the quadrangular cavity 7b (figure 5) formed by the folded wings 7-7a (figure 6), and a locking screw 24, which is screwed in the plate 23 so as to lock the flat end 19 of the ribs to the wings 7-7a of the T-shaped head.

Pairs of pulleys 23-23a (figure 5) are freely inserted in the two dovetail runners formed inside the two walls 13-13a and between the opposite pairs of angled portions 11-11a and 11a-14a respectively, and are mutually coupled by means of a spacer pin 24 to which the lateral tarpaulin panel 25 is anchored; said tarpaulin panel extends vertically so as to close the lateral sidewalls of the body when said sidewalls are returned to the closure position.

Finally, substantially conical wheels or pulleys 26 are inserted in the dovetail raceways 12a of each runner 1-1a that are open toward the inside the body; each one is adapted to support a conventional intermediate post 27, whereas the ends 28 of a conventional protection rub rail 29 are anchored in the opposite dovetail raceways 12; said rub rail is of the type shown in figure 7, which is curved so as to remain in contact with the outer surface of the sliding lateral tarpaulin panel 25.

Figure 6 illustrates a profiled guide member with a plurality of raceways, similar to the one of figure 5, in which the ribs 19 and the corresponding upper tarpaulin panel 21 are, however, locked by means of the screw 24 and the plate 23 to the head 7-7a of the rail.

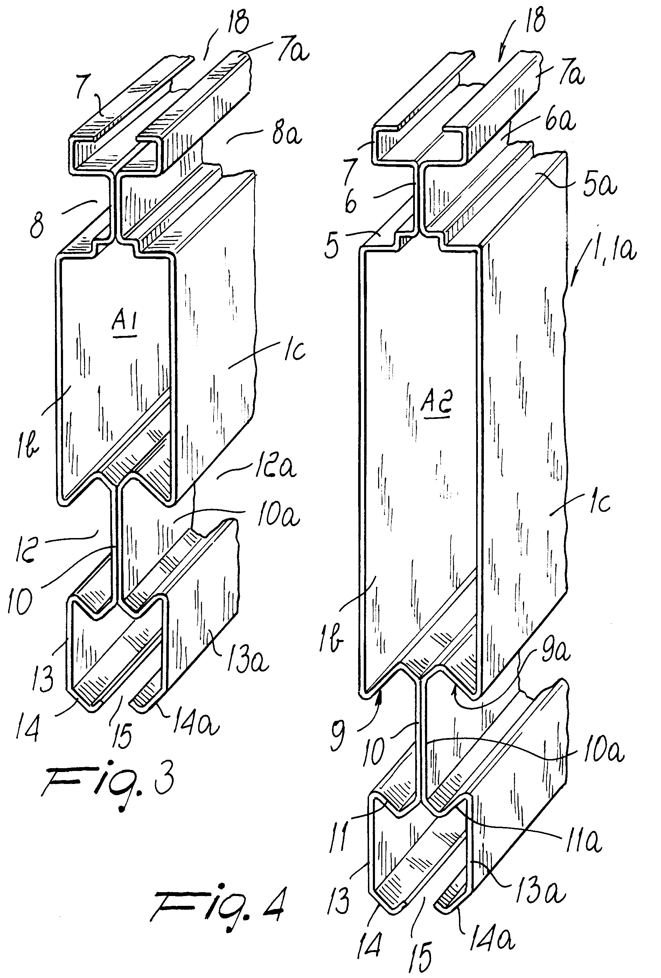

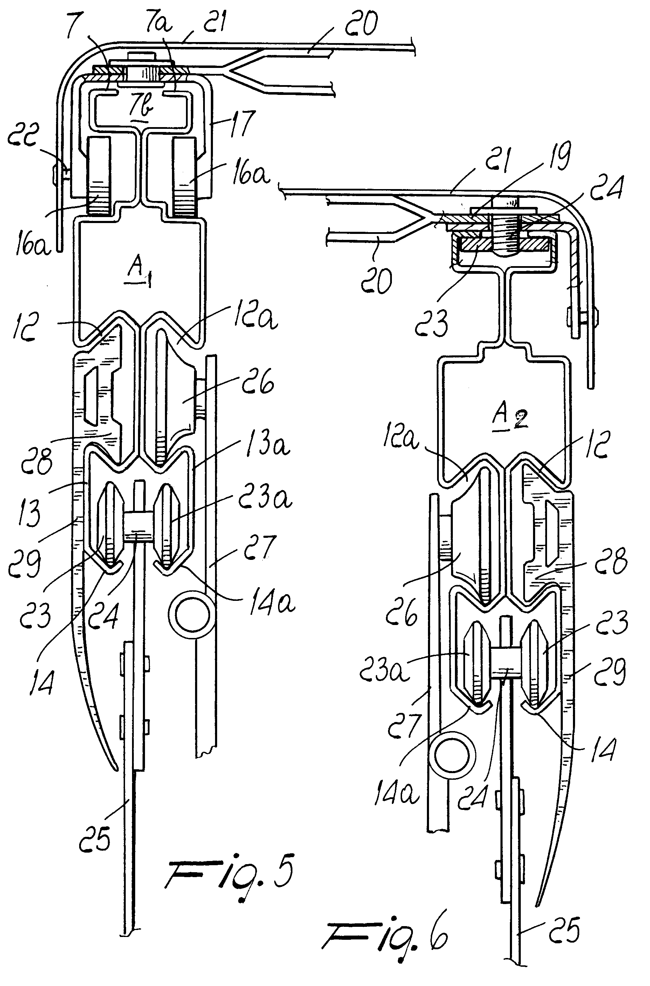

Still according to the invention, said profiled guide member with a plurality of raceways can be provided, for particular types of body and/or truck, as shown in a sectional view in figure 8. In this case, the runner does not have the intermediate box-like body A (or A1 or A2); its an upper rail 7-7a is identical to that of the runners of the preceding figures, its double-dovetail raceway 13-13a for the lateral tarpaulin panel is also identical to the one described above, but the dovetail raceways 12 for the rub rail and 12a for the posts are provided in a position that is lateral relative to the position for the sliding of the pulleys that support the lateral tarpaulin panel. In this case, the runner as a whole has a wider cross-section than the preceding ones and therefore can be used for coverings of special trucks.

The particular structure of the profiled guide member with a plurality of raceways described above is in practice easy and simple to produce, can be easily installed on the four uprights of a body having a different length, and for coverings of various heights, always having the advantage of allowing the movement of the roof and of the lateral tarpaulin panels independently of each other according to the loading requirements and with conventional rod-like means or the like to produce the sliding of the pulleys and sliders easily and quickly.

Of course, in the practical embodiment, structurally and functionally equivalent modifications and variations can be applied to the invention as described above according to some preferred embodiments thereof, without abandoning the scope of the protection of said invention.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Profiled guide member for truck covers, comprising a straight metal bar or profile shaped so as to define, at an upper part thereof, a substantially T-shaped continuous rail whose web protrudes centrally from said wall, said rail being adapted to contain sliders that support the ribs and the tarpaulin panel that forms the roof of the covering, whereas the lower portion of said profiled guide member is provided with a longitudinal slot for the passage of the lateral covering tarpaulin panel and is shaped so as to have, inside said profile, two substantially dovetail-shaped opposite runners for the sliding of two coaxial pulleys that support said lateral tarpaulin panel, two opposite flared portions being formed in the body of the profile between said upper portion and the lower one, said flared portions forming two substantially dovetail-shaped runners that are open on the opposite longitudinal sides of the profile, the runner directed toward the outside of the body being provided for the anchoring of a conventional lateral rub rail, the opposite runner being adapted to contain sliding pulleys for supporting intermediate posts movable independently of the lateral tarpaulin panels and of the sliding roof.

2. Profiled guide member for truck covers according to claim 1, characeterized in that it has a box-like structure defining an upper box-like portion defining said T-shaped continuous rail, and a lower box-like portion defining said longitudinal slot, said opposite flared portions being defined on said profiled guide member between said upper box-like portion and said lower box-like portion.

3. Profiled guide member according to claim 1, characterized in that it is preferably constituted by two identical metal profiles, substantially metal plate, that are symmetrically identical, each profile being shaped so as to bear half of said upper rail for the sliding of the ribs and runners for the lateral tarpaulin panel, for the optional intermediate stakes, and for the protective rub rail, said two profiles being coupled to each other in a mutually opposite position and being then locked by means of pins that are inserted by pressing within holes that are formed respectively in the mutually mating straight portions of said two profiles.

4. Profiled guide member according to claims 2 and 3, characterized in that the box-like portion of the runner that supports said rail is provided with dimensions that can vary vertically in order to give the profile greater flexural rigidity according to the dimensions of the body.

5. Profiled guide member according to claim 4, characterized in that said sliders that can slide on said upper rail are provided with screw means or the like for locking them to said rail, in order to allow to provide fixed covering roofs that are independent of the sliding of the lateral tarpaulin panels.

6. Profiled guide member according to the preceding claims, characterized in that it comprises ribs constituted by tubular elements that are flattened at the opposite ends to allow their anchoring, by means of screws, to the top of said sliders that can slide along said rail.

7. Profiled guide member according to the preceding claims, characterized in that it is constituted by a profile in which the runners for the lateral tarpaulin panel and the rub rail are arranged in mutually opposite positions and outside the runner that bears the pulleys for the lateral tarpaulin panel.
